# EUROPÄISCHE PATENTSCHRIFT

(11) **EP 3 534 056 B1**
(45) Veröffentlichungstag und Bekanntmachung des Hinweises auf die Patenterteilung: **07.06.2023**
(21) Anmeldenummer: 18212852.0
(22) Anmeldetag: 17.12.2018
(51) Int. Cl.: B65C 9/00, B65C 9/40, F16P 1/02

(54) **ETIKETTIERMASCHINE**
LABELLING MACHINE
ÉTIQUETEUSE

(30) Priorität: 28.02.2018 DE 202018101090 U
(43) Veröffentlichungstag der Anmeldung: 04.09.2019
(73) Patentinhaber: KRONES AG, 93073 Neutraubling (DE)
(72) Erfinder: Troppmann, Michael, 93073 Neutraubling (DE); Meissner, Soeren, 93073 Neutraubling (DE)
(74) Vertreter: Grünecker Patent- und Rechtsanwälte PartG mbB

(56) Entgegenhaltungen:
- WO-A1-2010/099822
- DE-A1-102012 003 353
- DE-A1-102014 108 093
- DE-B3-102016 111 825

## Beschreibung

Die Erfindung betrifft eine Etikettiermaschine umfassend ein Karussell, insbesondere zum Transport von zu etikettierenden Behältern, beispielsweise Flaschen, und ein an der Peripherie des Karussells austauschbar anordenbares Etikettieraggregat, das einen feststehenden Unterbau, ein bezüglich des Unterbaus in Richtung Karussell verschiebbares Funktionsteil und einen Aggregatschutz umfasst, der im angekoppelten Zustand des Etikettieraggregats den Bereich der Etikettenübergabe vor Benutzereingriffen schützt.

Die Möglichkeit, die Position des Funktionsteils auch nach dem Ankoppeln bzw. nach der Endmontage noch mit wenig Aufwand zu verändern ist wünschenswert, weil eine Verstellung der Aggregatsposition zum Anpassen an verschiedene Arbeitsprozesse die Flexibilität erhöht. Beispielsweise wird in manchen Fällen abhängig vom Behälterformat eine Anpassung des Abstands zwischen dem verschiebbaren Funktionsteil und dem Karussell vorgenommen, das Etikettieraggregat wird also in verschiedene Betriebspositionen gebracht.

Es ist bekannt, bei Etikettiermaschinen zur Gewährleistung der Betriebssicherheit eine Verschutzung (auch Grundmaschinenschutz oder Hebeschutz genannt) vorzusehen, bei Rundläufern typischerweise am Umfang des Karussells. Das Etikettieraggregat arbeitet dann durch eine Öffnung in dieser Verschutzung mit dem Karussell zusammen. In solchen Fällen wird der Arbeitsbereich der Maschine, insbesondere der Bereich der Etikettenübergabe, in dem das Etikettieraggregat mit dem Karussell zusammenarbeitet, vor Benutzereingriffen durch eine Kombination aus Verschutzung und Aggregatschutz vor Benutzereingriffen geschützt. In diesem Fall sollte für eine optimale Schutzwirkung im angekoppelten Zustand des Aggregats, unabhängig von der Betriebsposition idealerweise kein Spalt mehr verbleiben, durch den der Benutzer greifen kann, beispielsweise zwischen Aggregatschutz und Verschutzung.

Um in einem solchen Aufbau einen Eingriffsschutz zu erzielen, wird in manchen Fällen ein einteiliger Aggregatschutz verwendet, der zusammen mit dem Funktionsteil verschiebbar ist. Die seitlichen Bereiche des Aggregatschutzes werden dann so dimensioniert und angeordnet, dass sie in den Arbeitsbereich des Karussells hineinragen, wenn der Funktionsteil nah an das Karussell herangeschoben ist. Aus dieser Position kann der Funktionsteil zumindest in einem begrenzten Maß von dem Karussell weg verschoben werden kann, ohne dass Spalte entstehen, wobei dann der Aggregatschutz weniger weit in den Arbeitsbereich des Karussells hineinragt. Der Aggregatschutz darf jedoch in keiner Betriebsposition zu weit in den Arbeitsbereich des Karussells hineinragen, weil er sonst dessen Funktionsweise beeinträchtigt, beispielsweise indem er in den Transportweg der Behälter hineinragt. Daher ist das Etikettieraggregat nur in einem sehr begrenzten Umfang vom Karussell weg verschiebbar, ohne dass Spalte zwischen Aggregatschutz und Verschutzung auftreten.

Etikettieragregate mit verschiebbaren Schutzelementen sind aus der DE102014108093 und der DE102012003353 bekannt.

Somit ist die Flexibilität der bekannten Maschinen unter Berücksichtigung der Betriebssicherheit niedrig.

Der Erfindung liegt daher die Aufgabe zu Grunde, eine Etikettiermaschine bereitzustellen, die einen flexiblen Einsatz der Etikettiermaschine durch einfache Anpassung an verschiedene Arbeitsprozesse erlaubt, ohne dabei die Betriebssicherheit zu verringern.

Die Aufgabe wird durch den Gegenstand des Anspruchs 1 gelöst. Bei einer Etikettiermaschine umfassend ein Karussell, insbesondere zum Transport von zu etikettierenden Behältern, beispielsweise Flaschen, und ein an der Peripherie des Karussells austauschbar anordenbares Etikettieraggregat, das einen feststehenden Unterbau, ein bezüglich des Unterbaus in Richtung Karussell verschiebbares Funktionsteil und einen Aggregatschutz umfasst, der im angekoppelten Zustand des Etikettieraggregats den Bereich der Etikettenübergabe vor Benutzereingriffen schützt, umfasst der Aggregatschutz mindestens ein am Unterbau ortsfest angebrachtes Schutzelement (im Folgenden der Einfachheit halber als ortsfestes Schutzelement bezeichnet) und ein gegenüber dem ersten Schutzelement in Richtung Karussell verschiebbares Schutzelement.

Durch die Aufteilung in ein verschiebbares und ortsfestes Schutzelement kann der Eingriffsschutz allein durch Ändern der relativen Position der Schutzelemente flexibel an die Position des Funktionsteils angepasst werden. Ein Hineinragen in den Arbeitsbereich des Karussells ist in keiner Betriebsposition des Funktionsteils erforderlich. Daher kann die Etikettiermaschine, unter Gewährleistung der Betriebssicherheit, flexibel eingesetzt werden, insbesondere für verschiedene Arbeitsprozesse passend angepasst werden.

Der Aggregatschutz kann also derart ausgebildet sein, dass er im angekoppelten Zustand des Etikettieraggregats den Bereich der Etikettenübergabe vor Benutzereingriffen unabhängig von der Betriebsposition des Funktionsteils schützt.

Der Unterbau kann beispielsweise einen Rahmen oder ein Gestell umfassen. Der Unterbau kann zum Ankoppeln des Etikettieraggregats positioniert werden und im angekoppelten Zustand positionsfest verbleiben.

Die verschiebbaren und ortsfesten Schutzelemente des Aggregatschutzes (im Folgenden zur Vereinfachung zusammenfassend als Schutzelemente bezeichnet) sind in Form von Schutzscheiben oder Schutzwänden ausgebildet.

Jedes Schutzelement kann einteilig oder mehrteilig ausgebildet sein.

Der angekoppelte Zustand des Etikettieraggregats liegt vor, wenn das Etikettieraggregat in der für den Betrieb vorgegebenen Position und Ausrichtung an der Peripherie des Karussells angeordnet ist, so dass es mit dem Karussell zusammenarbeiten kann. In der vorliegenden Anmeldung wird, wenn die Positionen von Karussell und Etikettieraggregat zueinander in Beziehung gesetzt werden und sofern nichts anderes spezifiziert ist, stets von der Situation ausgegangen, in der das Etikettieraggregat sich im angekoppelten Zustand befindet.

Der Funktionsteil umfasst die Elemente des Etikettieraggregats, die die Etikettierfunktion erfüllen, beispielsweise Etiketten halten, transportieren und/oder beleimen. Insbesondere kann der Funktionsteil einen Greiferzylinder, einen Palettenrotor und/oder eine Leimwalze umfassen.

Der Funktionsteil kann beispielsweise entlang von Führungselementen, verschiebbar sein, beispielsweise entlang von Stangen oder Schienen. Solche Führungselemente können dabei Teil des Unterbaus oder an diesem befestigt sein.

Der Funktionsteil ist also auch nach dem Ankoppeln bzw. nach der Anordnung an der Peripherie des Karussells noch positionierbar. Er kann in verschiedene Betriebspositionen gebracht werden, wobei sich die Betriebspositionen im Abstand des Funktionsteils vom Karussell unterscheiden. Verschiedene Betriebspositionen können beispielsweise für verschiedene Betriebsmodi bzw. verschiedene Flaschenformate eingestellt werden.

Soweit im Folgenden eine Abdeckung, ein Eingriffsschutz oder ein Überlapp beschrieben wird, so ist damit stets gemeint, dass diese jeweils unabhängig von der Betriebsposition, sprich in allen vorgesehen Betriebspositionen erzielt werden.

Das verschiebbare Element kann derart ausgebildet und angeordnet sein, dass es nicht in den Arbeitsbereich des Karussells hineinragt, unabhängig davon, in welche Position es verschoben wird. Die Positionen, in die es verschiebbar ist, können dabei auf verschiedene Arten vorgegeben sein, wie unten noch im Detail erläutert wird. Das bzw. ein Teil des ortsfesten Schutzelements kann an den Arbeitsbereich des Karussells angrenzend angeordnet sein, insbesondere so, dass es nicht in den Arbeitsbereich des Karussells hineinragt oder nur so weit, dass es die Funktion des Karussells, insbesondere den Behältertransport, nicht beeinträchtigt.

Das verschiebbare Schutzelement kann unabhängig von dem Funktionsteil des Etikettieraggregats verschiebbar sein oder an die Bewegung des Funktionsteils gekoppelt sein. Das verschiebbare Schutzelement kann entlang von Führungselementen, beispielsweise Schienen oder Stangen verschiebbar sein. Das Schutzelement kann an dem Funktionsteil befestigt sein, das beispielsweise entlang von Schienen oder Stangen verschiebbar sein kann, oder das Schutzelement und der Funktionsteil können auf demselben verschiebbaren Element, beispielsweise einer Platte, befestigt sein, die beispielsweise entlang von Schienen oder Stangen verschiebbar sein kann.

Die Etikettiermaschine kann eine Verschutzung des Karussells umfassen, die eine Öffnung aufweist, durch die das Etikettieraggregat mit dem Karussell zusammenarbeitet, wobei das ortsfeste Schutzelement derart ausgebildet und angeordnet ist, dass es im angekoppelten Zustand des Etikettieraggregats zumindest seitlich die Öffnung abdeckt, insbesondere mit der Verschutzung im Wesentlichen abschließt oder sich mit dieser überlappt. Im Wesentlichen bedeutet hier, dass kein hermetischer Abschluss oder exakte Passform erforderlich ist, sondern dass der Abschluss derart ist, dass sicher kein Benutzer in die Öffnung hineingreifen kann.

Das heißt, dass der Aggregatschutz im angekoppelten Zustand des Etikettieraggregats zusammen mit der Verschutzung den Bereich der Etikettenübergabe besonders effektiv vor Benutzereingriffen von der Seite schützt. Die obige Ausgestaltung ist vorteilhaft, weil nicht nur der Übergabebereich und Funktionsteil selbst geschützt sind, sondern der gesamte Bereich der Maschine geschützt ist, beispielsweise einschließlich Transportweg der Behälter.

Die Verschutzung kann beispielsweise in Form von Wänden und/oder Scheiben, beispielsweise Plexiglasscheiben, ausgebildet sein. Die Verschutzung kann umfänglich um das Karussell angeordnet sein, insbesondere um den gesamten Umfang des Karussells umlaufend. Die Zufuhr und Abfuhr von Behältern kann durch weitere Öffnungen in der Verschutzung erfolgen.

Die Schutzelemente können mindestens zur seitlichen Abdeckung eines Funktionsteils, insbesondere auf der gesamten Höhe des Funktionsteils, ausgebildet und angeordnet sein. Insbesondere kann zumindest ein Teil der Schutzelemente im Wesentlichen vertikal angeordnet sein. Ein seitlicher Eingriff in den Funktionsteil ist besonders wahrscheinlich und eine solche Ausgestaltung bietet einen entsprechenden Schutz.

Die Schutzelemente können beispielswiese, insbesondere im Wesentliche vertikal angeordnete, Schutzscheiben bzw. Schutzwände umfassen, die insbesondere derart ausgebildet und angeordnet sein können, dass das sie das verschiebbare Funktionsteil auf seiner gesamten Höhe abdecken.

Optional kann der Aggregatschutz auch derart ausgebildet sein, dass der Bereich der Etikettenübergabe unabhängig von der Betriebsposition auch von oben und/oder unten abgedeckt ist.

Die Schutzelemente des Aggregatschutzes können derart ausgebildet und angeordnet sein, dass das Funktionsteil seitlich von mindestens drei Seiten durch die Schutzelemente verdeckt ist, insbesondere auf der von dem Karussell abgewandten Seite und zwei daran angrenzenden Seiten. Dies ist, wie oben schon allgemein erläutert, unabhängig von der Betriebsposition der Fall. Somit ist ein Schutz von allen Seiten gewährleistet und lediglich die Seite, an der das Funktionsteil mit dem Karussell wechselwirkt ist nicht unmittelbar durch den Aggregatschutz abgedeckt. Ein Eingriffsschutz dieses Teils kann jedoch durch entsprechende Anordnung der Verschutzung des Karussells zusammen mit dem Aggregatschutz erzielt werden. Insbesondere kann das Schutzelement an der von dem Karussell abgewandten Seite ein verschiebbares Schutzelement sein und das ortsfeste Schutzelement kann mindestens zweiteilig sein und an den zwei angrenzenden Seiten kann jeweils eines der Teile des ortsfesten Schutzelements angeordnet sein. Die Schutzelemente können beispielsweise U-förmig um den Funktionsteil angeordnet sein. Dies ist vorteilhaft, weil dann ein zuverlässiger Eingriffsschutz, bei dem keine Spalte entstehen, möglich ist. Insbesondere ist diese Ausbildung vorteilhaft, wenn das Etikettieraggregat angrenzend an eine Verschutzung des Karussells angeordnet wird. Dann können die Teile des ortsfesten Schutzelements unabhängig von der Betriebsposition mit der Verschutzung abschließen oder überlappen (wobei der Überlapp unabhängig von der Betriebsposition ist) und das Ändern der Betriebsposition führt nicht zu Spalten zwischen Verschutzung und Aggregatschutz oder dazu, dass der Aggregatschutz zu weit in den Arbeitsbereich des Karussells hineinragt.

Alternativ oder zusätzlich können die Schutzelemente, jeweils in Form von Schutzscheiben oder Schutzwänden, derart ausgebildet und angeordnet sein, dass zwischen dem ortsfesten Schutzelement und dem verschiebbaren Schutzelement ein Überlapp vorliegt.

Wie oben schon allgemein erläutert, liegt dieser Überlapp unabhängig von der Betriebsposition vor.

Ein solcher Überlapp erhöht die Betriebssicherheit, da ein zuverlässiger Eingriffsschutz entsteht. Dadurch, dass der Überlapp variabel ist und unabhängig von der Betriebsposition vorliegt, bleibt diese Betriebssicherheit auch bei hoher Flexibilität der Maschine erhalten.

Dass ein Überlapp vorliegt bedeutet, dass von der Seite betrachtet das verschiebbare Schutzelement vor oder hinter dem ortsfesten Schutzelement angeordnet ist. Durch Verschieben des verschiebbaren Schutzelements ändert sich lediglich, wie groß der Überlapp ist, er bleibt jedoch grundsätzlich erhalten. Somit liegt der Überlapp unabhängig von der Betriebsposition vor.

Das verschiebbare Schutzelement kann an der von dem Karussell abgewandten Seite des Funktionsteils angeordnet sein und das ortsfeste Schutzelement kann seitlich an dem Unterbau befestigt sein. Insbesondere kann das ortsfeste Schutzelement mindestens zweiteilig ausgebildet sein und zwei an gegenüberliegenden Seiten des Unterbaus befestigte Seitenteile umfassen. Insbesondere können die Schutzelemente so angeordnet sein, dass der Funktionsteil zumindest teilweise zwischen den Seitenteilen angeordnet ist. Wie oben schon allgemein erläutert, liegt diese Anordnung unabhängig von der Betriebsposition (bzw. in allen vorgesehenen Betriebspositionen) vor. Die Position, in die das verschiebbare Schutzelement verschoben werden kann, kann durch die Ausgestaltung des Etikettieraggregats vorgegeben sein, insbesondere durch die Ausgestaltung der Schutzelemente selbst und/oder entsprechender Führungselemente und/oder durch eine Koppelung mit dem Funktionalteil.

Die Schutzelemente können jeweils in Form von vertikal angeordneten Schutzscheiben oder Schutzwänden ausgebildet sein. Das ortsfeste Schutzelement kann, insbesondere in diesem Fall, zweiteilig ausgebildet sein und zwei gegenüberliegende, insbesondere im Wesentlichen parallel zueinander angeordnete, Seitenteile umfassen, die jeweils eine Seite des Funktionsteils abdecken. Das verschiebbare Schutzelement kann derart ausgebildet und angeordnet sein, dass es die dritte (also die vom Karussell abgewandte) Seite des Funktionsteils abdeckt. Das verschiebbare Schutzelement kann beispielsweise drei Bereiche aufweisen, den die dritte Seite abdeckenden Bereich (im Folgenden als Abdeckbereich des verschiebbaren Schutzelements bezeichnet) und zwei Überlappbereiche, wobei je ein Überlappbereich in allen Betriebspositionen zumindest teilweise mit einem der Seitenteile überlappt. Die Überlappbereiche können im Wesentlichen parallel zu den ortsfesten Seitenteilen angeordnet sein. Je ein Überlappbereich kann an je einer der Seitenkanten des Abdeckbereichs des verschiebbaren Schutzelements angrenzend angeordnet sein. Der Abdeckbereich des verschiebbaren Schutzelements kann einstückig mit den Überlappbereichen ausgebildet sein, insbesondere können die beiden Seitenkanten des verschiebbaren Schutzelements derart geformt, insbesondere in Richtung Karussell gebogen, sein, dass sie den Überlappbereich bilden. Alternativ oder zusätzlich zu einem derartig geformten bzw. gebogenen verschiebbaren Schutzelement kann das verschiebbare Schutzelement auch mehrteilig ausgebildet sein, wobei die Überlappbereiche, jeweils als separater Teil ausgebildet sein können, der an dem Abdeckbereich des verschiebbaren Schutzelements befestigt ist.

Die Etikettiermaschine kann insbesondere Begrenzungselemente umfassen, die derart ausgebildet und angeordnet sind, dass das verschiebbare Schutzelement lediglich so weit von dem Karussell weg verschiebbar ist, dass kein Spalt zwischen dem verschiebbaren Schutzelement und dem ortsfesten Schutzelement entsteht.

Die Begrenzungselemente können Teil des verschiebbaren Schutzelements und/oder des ortsfesten Schutzelements sein. Alternativ oder zusätzlich können der Unterbau und/oder etwaige Führungselemente für das verschiebbare Schutzelement die Begrenzungselemente umfassen und/oder es können Begrenzungselemente daran befestigt sein.

In dem Fall, dass die Begrenzungselemente Teil des jeweiligen Schutzelements sind, kann insbesondere ein erstes Begrenzungselement einstückig mit dem Abdeckbereich und/oder dem Überlappbereich des verschiebbaren Schutzelements ausgebildet oder an diesem befestigt sein bzw. ein zweites Begrenzungselement kann einstückig mit dem den Funktionsteil abdeckenden Bereich (Abdeckbereich) des ortsfesten Schutzelements ausgebildet oder an diesem befestigt sein.

Das verschiebbare Schutzelement kann ein erstes Begrenzungselement umfassen und das ortsfeste Schutzelement kann ein zweites Begrenzungselement umfassen, wobei das erste Begrenzungselement und das zweite Begrenzungselemente derart zusammenwirken, insbesondere zusammenstoßen und/oder ineinandergreifen, dass das verschiebbare Schutzelement lediglich so weit von dem Karussell weg verschiebbar ist, dass kein Spalt zwischen dem verschiebbaren Schutzelement und dem ortsfesten Schutzelement entsteht.

Insbesondere können das erste Begrenzungselement und das zweite Begrenzungselement jeweils in Form von vertikal, insbesondere entlang von Kanten des jeweiligen den Funktionsteil abdeckenden Bereichs und/oder des Überlappbereichs der Schutzelemente, verlaufenden Fortsätzen ausgebildet sein, die derart ausgebildet und angeordnet sind, dass sie zusammenstoßen und/oder ineinandergreifen, wenn das verschiebbare Schutzelement einen vorgegebenen Maximalabstand vom Karussell erreicht hat, so dass das verschiebbare Schutzelement nicht weiter von dem Karussell weg verschiebbar ist.

Beispielsweise können die Begrenzungselemente entlang der vertikalen Kanten der Schutzelemente verlaufen, insbesondere entlang der gesamten Höhe der Kanten oder nur entlang eines Teils der Kanten. Begrenzungselemente, die über die gesamte Höhe verlaufen sind beispielsweise vorteilhaft, wenn ein Begrenzungselement und der entsprechende den Funktionsteil abdeckende Bereich einstückig ausgebildet sind, beispielsweise in Form einer entsprechend geformten Schutzwand oder Schutzscheibe, weil dies die Herstellung vereinfacht. Die Fortsätze können beispielsweise derart ausgebildet sein, dass sie sie in eine Richtung abstehen, die senkrecht zu der Richtung ist, in der das verschiebbare Schutzelement verschiebbar ist.

Insbesondere können in der oben beschriebenen Ausführung, in der zwei ortsfeste Seitenteile sich mit dem verschiebbaren Schutzelement überlappen, an den zu dem verschiebbaren Schutzelement weisenden Seitenkanten der Seitenteile und an den Kanten des Bereichs des verschiebbaren Schutzelements, der sich mit den Seitenteilen überlappt, jeweils Begrenzungselemente angeordnet sein, die derart angeordnet sind und miteinander wechselwirken, dass die Bewegung des verschiebbaren Schutzelements von dem Karussell weg begrenzt wird.

Die Fortsätze können dabei insbesondere jeweils senkrecht zur Bewegungsrichtung des verschiebbaren Schutzelements verlaufen und derart ausgebildet sein, dass der Fortsatz des beweglichen Schutzelementes näher an dem Karussell angeordnet ist, als der jeweilige Fortsatz der Seitenteile. Die Fortsätze können dabei insbesondere derart ausgebildet sein, dass die Bewegung des verschiebbaren Schutzelements von dem Karussell weg dadurch begrenzt wird, dass die Fortsätze der Seitenteile die Bewegung der Fortsätze des verschiebbaren Schutzelements blockieren. Die Fortsätze können alternativ oder zusätzlich auch hakenartig ineinandergreifen, insbesondere beispielsweise indem sie einen L-förmigen oder U-förmigen Querschnitt aufweisen.

Weitere Merkmale und Vorteile werden nachfolgend anhand der beispielhaften Figuren erläutert. Dabei zeigen:
- Figur 1: eine schematische, nicht maßstabsgetreue Draufsicht auf eine Etikettiermaschine einer ersten Ausführungsform in einer ersten Betriebsposition,
- Figur 2: eine schematische, nicht maßstabsgetreue Draufsicht auf die Etikettiermaschine der ersten Ausführungsform in einer zweiten Betriebsposition,
- Figur 3: eine schematische, nicht maßstabsgetreue Schrägansicht des Etikettieraggregats der ersten Ausführungsform und
- Figur 4: eine schematische, nicht maßstabsgetreue Draufsicht auf eine Etikettiermaschine einer zweiten Ausführungsform.

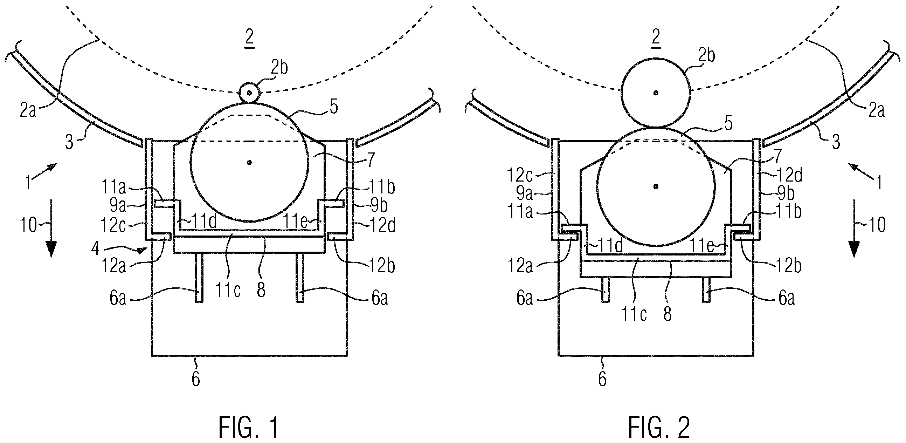

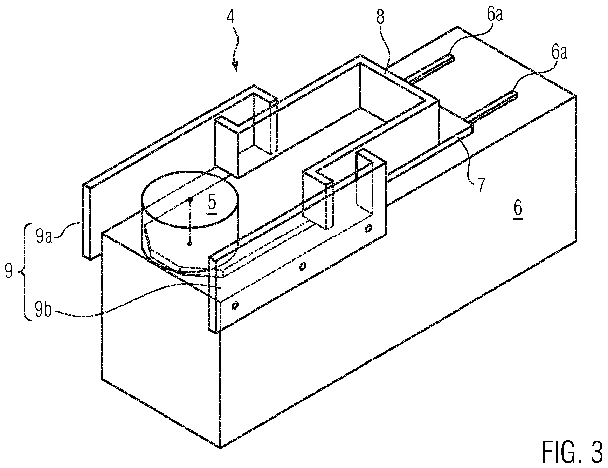

Figuren 1 und 2 zeigen jeweils eine Draufsicht auf die Etikettiermaschine der ersten Ausführungsform und Figur 3 zeigt eine Schrägansicht des Etikettieraggregats dieser Ausführungsform. Die Etikettiermaschine 1 umfasst ein Karussell 2 mit einem Transportbereich (angedeutet mit dem Bezugszeichen 2a) in dem Behälter 2b mittels des Karussells transportiert werden, eine Verschutzung 3, die umfänglich um das Karussell angeordnet ist und den Transportbereich zumindest teilweise einhaust, und ein Etikettieraggregat 4, welches am Umfang des Karussells angeordnet ist und durch eine Öffnung in der Verschutzung mit dem Karussell zusammenarbeitet. Hier sind zwar nur eine Öffnung und ein Etikettieraggregat gezeigt, es ist jedoch auch möglich, dass mehrere Öffnungen vorgesehen sind, an denen jeweils ein Etikettieraggregat angeordnet ist. In Figuren 1 und 2 ist das Etikettieraggregat im angekoppelten Zustand dargestellt.

In einer solchen Etikettiermaschine können auf Behälter, die mittels des Karussells durch den Transportbereich transportiert werden, in einem Bereich der Etikettenübergabe, Etiketten aufgebracht werden, die von dem Etikettieraggregat, insbesondere von einem Funktionsteil des Etikettieraggregats, übergeben werden.

Der Funktionsteil 5 umfasst hier beispielhaft ein rotierbares Element, beispielsweise einen Palettenrotor oder einen Greiferzylinder. Der Unterbau kann, wie hier gezeigt, (im angekoppelten Zustand) im Bereich der Öffnung der Verschutzung aufgestellt sein. Der Unterbau kann beispielsweise in Form eines Wagens oder Gestells ausgebildet sein.

Der Unterbau weist in diesem Beispiel Führungselemente in Form von horizontal angeordneten Schienen oder Stangen 6a auf, entlang derer der Funktionsteil zum Karussell hin und von diesem weg verschoben werden kann. Im hier gezeigten Beispiel ist das Funktionsteil auf einer Platte 7 angeordnet, die auf den Schienen verschiebbar angeordnet ist, so dass das Funktionsteil mittels der Platte entlang der Schienen verschoben werden kann.

So kann der Funktionsteil in verschiedene Betriebspositionen gebracht werden, die sich im Abstand des Funktionsteils vom Karussell unterscheiden. Hier nicht dargestellt kann optional ein Antrieb vorgesehen sein, der das Funktionsteil verschiebt. Alternativ kann das Verstellen auch manuell erfolgen.

Unabhängig davon, welcher Mechanismus für das Verschieben des Funktionsteils vorgesehen ist, kann ein Begrenzungsmechanismus (hier nicht gezeigt) vorgesehen sein, der die Bewegung des Funktionsteils entlang der Führungselemente begrenzt, insbesondere die möglichen Positionen des Funktionsteils auf die vorgegebenen Betriebspositionen beschränkt. Das können beispielsweise Stopper sein, jedoch sind auch andere Elemente denkbar, oder die Form der Führungselemente, beispielsweise der Stangen oder Schienen, selbst kann derart sein, dass die Bewegung begrenzt ist. Das Funktionsteil kann dann also in einem vorgegebenen Intervall bewegt werden, insbesondere bis zu einem vorgegebenen Maximalabstand vom Karussell.

In Figuren 1 bis 3 ist beispielhaft ein Aggregatschutz gezeigt, der ein verschiebbares Schutzelement 8 und ein zweiteiliges ortsfestes Schutzelement 9 mit zwei Seitenteilen 9a und 9b umfasst. Die Schutzelemente sind jeweils in Form von vertikal angeordneten Schutzwänden oder Schutzscheiben ausgebildet und erstrecken sich in diesem Beispiel an drei Seiten entlang der gesamten Höhe des Funktionsteils. Die Seitenteile sind einander gegenüberliegend und parallel zueinander und zu den Führungselementen angeordnet und an dem Unterbau befestigt. Die Seitenteile sind derart ausgebildet und angeordnet, dass der Funktionsteil unabhängig von der Betriebsposition zumindest teilweise zwischen den Seitenteilen angeordnet ist.

Das verschiebbare Schutzelement ist auf der Platte 7 befestigt, so dass es zusammen mit der Platte und dem daran angebrachten Funktionsteil entlang der Schienen verschiebbar ist. Es ist jedoch auch denkbar, dass das verschiebbare Schutzelement anderweitig verschiebbar angeordnet ist, beispielsweise unabhängig von dem Funktionsteil verschiebbar oder an dem Funktionsteil befestigt bzw. mit diesem gekoppelt ist.

Das verschiebbare Schutzelement hat einen Bereich, der im Wesentlichen senkrecht zu den Seitenteilen und den Führungselementen angeordnet ist und die vom Karussell abgewandte Seite des Funktionsteils abdeckt. Außerdem weist es zwei Bereiche auf, die sich unabhängig von der Betriebsposition mit den Seitenteilen überlappen, die Überlappbereiche. Wie in der Figur erkennbar ist, sind diese Bereiche im Wesentlichen parallel zu den Seitenteilen angeordnet. In der Figur ist ein einstückiges Schutzelement gezeigt, also ein Schutzelement, bei dem alle drei Bereiche aus einem Stück ausgebildet sind. Beispielsweise kann es sich um eine entsprechend geformte Schutzscheibe bzw. Schutzwand handeln. Alternativ kann das verschiebbare Schutzelement mehrteilig ausgebildet sein und zumindest manche der Bereiche können als gesonderte Teile des verschiebbaren Schutzelements ausgebildet sein, die aneinander befestigt sind.

In der Figur sind auch Begrenzungselemente 11a, 11b, 12a und 12b gezeigt, die hier beispielhaft in Form von Fortsätzen an vertikal verlaufenden Kanten der Schutzelemente ausgebildet sind, wobei die Fortsätze jeweils senkrecht zur Bewegungsrichtung 10 des verschiebbaren Schutzelements angeordnet sind und die Fortsätze 11a und 11b des verschiebbaren Schutzelements näher an dem Karussell angeordnet sind als die Fortsätze 12a und 12b der Seitenteile, so dass sie bei Bewegung von dem Karussell weg bei einer vorgegebenen Position gegen die Fortsätze der Seitenteile stoßen und durch diese blockiert werden. Auch andere Begrenzungselemente sind möglich, insbesondere solche, die nicht wie in der Figur entlang der gesamten Höhe der Schutzelemente verlaufen. Die Begrenzungselemente können auch nicht Teil der Schutzelemente sein und beispielsweise Teil von oder an Führungselementen oder dem Unterbau befestigt sein.

In dem in Figuren 1 bis 3 gezeigtem Beispiel ist jedes der Seitenteile einstückig ausgebildet, sprich, der Fortsatz 12a bzw. 12b und der Bereich, der den Funktionsteil abdeckt (Abdeckbereiche 12c bzw. 12d) sind hier jeweils in Form einer entsprechend geformten einstückigen Schutzwand oder Schutzscheibe ausgebildet. Ebenso ist hier das verschiebbare Schutzelement einstückig ausgebildet, sprich, die Fortsätze 11a und 11b, der Abdeckbereich 11c und die Überlappbereiche 11d und 11e des verschiebbaren Schutzelements 8 sind hier in Form einer entsprechend geformten einstückigen Schutzwand oder Schutzscheibe ausgebildet. Es versteht sich, dass die Schutzelemente nicht zwingend einstückig ausgebildet sein müssen.

In Figuren 1 und 2 sind zwei verschiedene Betriebspositionen gezeigt. In der ersten Betriebsposition, die in Figur 1 gezeigt ist, ist der Funktionsteil näher an dem Karussell angeordnet als in der zweiten Betriebsposition, die in Figur 2 gezeigt ist.

Die in Figur 1 gezeigte erste Betriebsposition ist beispielsweise für einen Etikettierbetrieb für kleinere Behälter geeignet, die zweite Betriebsposition für größere Behälter. Wie man den Figuren entnehmen kann, ist in der ersten Betriebsposition der Überlapp zwischen den Seitenteilen und dem verschiebbaren Schutzelement des Aggregatschutzes größer als in der zweiten Betriebsposition. Er bleibt jedoch in beiden Fällen bestehen und es entstehen keine Spalte, durch die ein Benutzereingriff möglich ist.

In der in Figur 2 gezeigten zweiten Betriebsposition sind der Funktionsteil und das verschiebbare Schutzelement derart angeordnet, dass sie den vorgegebenen Maximalabstand von dem Karussell haben. Wie in der Figur angedeutet, stoßen hier die Begrenzungselemente aneinander und verhindern so, dass das verschiebbare Schutzelement weiter von dem Karussell wegbewegt wird. Insbesondere stößt je ein Fortsatz 11a und 11b des verschiebbaren Schutzelements karussellseitig gegen den entsprechenden Fortsatz 12a und 12b des jeweiligen Seitenteils des ortsfesten Schutzelements.

Es versteht sich, dass die Begrenzungselemente auch anders ausgebildet sein können und insbesondere nicht zwangsläufig Teil der Schutzelemente oder an diesen befestigt sein müssen.

Wie man den Figuren entnehmen kann, bilden die Schutzelemente zusammen einen etwa U-förmigen seitlichen Aggregatschutz, wobei im Bereich des Überlapps die Seitenteile weiter außenliegend angeordnet sind als das verschiebbare Schutzelement. Alternativ können die mit den Seitenteilen überlappenden Bereiche des verschiebbaren Schutzelements jedoch auch außerhalb der Seitenteile verlaufen.

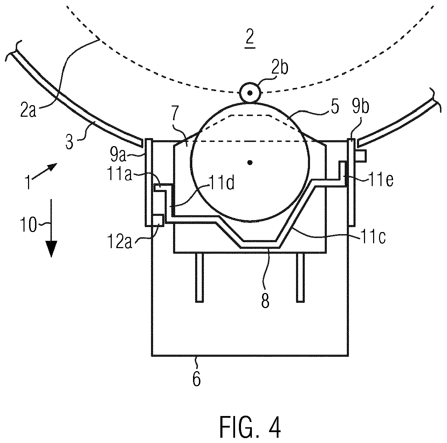

Figur 4 zeigt schematisch eine Draufsicht auf eine zweite Ausführungsform, die eine Abwandlung der Ausführungsform der Figuren 1 bis 3 darstellt, wobei hier die Schutzelemente eine andere Form aufweisen. Insbesondere weisen die Schutzelemente eine Form auf, so dass sie durch Anpassung an die Form des Funktionsteils besonders nah an dem Funktionsteil angeordnet werden können und somit einen sehr platzsparenden Aggregatschutz ermöglichen. In der in Figur 4 gezeigten Ausführungsform gibt es nur zwei Begrenzungselemente 11a und 12a.

## Patentansprüche

1. Etikettiermaschine (1) umfassend ein Karussell (2) und ein an der Peripherie des Karussells (2) austauschbar anordenbares Etikettieraggregat (4), das einen feststehenden Unterbau (6), ein bezüglich des Unterbaus (6) in Richtung Karussell (2) verschiebbares Funktionsteil (5) und einen Aggregatschutz umfasst, der im angekoppelten Zustand des Etikettieraggregats (4) den Bereich der Etikettenübergabe vor Benutzereingriffen schützt,
**dadurch gekennzeichnet, dass**
der Aggregatschutz mindestens ein am Unterbau (6) ortsfest angebrachtes Schutzelement (9) und ein gegenüber dem ersten Schutzelement in Richtung Karussell (2) verschiebbares Schutzelement (8) umfasst,
wobei das erste Schutzelement eine Schutzscheibe oder eine Schutzwand umfasst.

2. Etikettiermaschine (1) nach Anspruch 1 umfassend eine Verschutzung (3) des Karussells (2), die eine Öffnung aufweist, durch die das Etikettieraggregat (4) mit dem Karussell (2) zusammenarbeitet, wobei das ortsfeste Schutzelement (9) derart ausgebildet und angeordnet ist, dass es im angekoppelten Zustand des Etikettieraggregats (4) zumindest seitlich die Öffnung abdeckt, insbesondere mit der Verschutzung (3) im Wesentlichen abschließt oder sich mit dieser überlappt.

3. Etikettiermaschine (1) nach Anspruch 1 oder 2, wobei die Schutzelemente (8, 9) mindestens zur seitlichen Abdeckung des Funktionsteils (5), insbesondere auf der gesamten Höhe des Funktionsteils (5), ausgebildet und angeordnet sind.

4. Etikettiermaschine (1) nach einem der vorangegangenen Ansprüche, wobei die Schutzelemente (8, 9) des Aggregatschutzes derart ausgebildet und angeordnet sind, dass der Funktionsteil (5) seitlich von mindestens drei Seiten durch die Schutzelemente (8, 9) verdeckt ist, insbesondere auf der von dem Karussell (2) abgewandten Seite und zwei daran angrenzenden Seiten.

5. Etikettiermaschine (1) nach einem der vorangegangenen Ansprüche, wobei die Schutzelemente (8, 9) derart ausgebildet und angeordnet sind, dass zwischen dem ortsfesten Schutzelement (9) und dem verschiebbaren Schutzelement (8) ein Überlapp vorliegt.

6. Etikettiermaschine (1) nach einem der vorangegangenen Ansprüche, wobei das verschiebbare Schutzelement (8) an der von dem Karussell (2) abgewandten Seite des Funktionsteils (5) angeordnet ist und das ortsfeste Schutzelement (9) seitlich an dem Unterbau (6) befestigt ist.

7. Etikettiermaschine (1) nach Anspruch 6, wobei das ortsfeste Schutzelement (9) mindestens zweiteilig ausgebildet ist und zwei an gegenüberliegenden Seiten des Unterbaus (6) befestigte Seitenteile (9a, 9b) umfasst.

8. Etikettiermaschine (1) nach Anspruch 7, wobei der Funktionsteil (5) zumindest teilweise zwischen den Seitenteilen (9a, 9b) angeordnet ist.

9. Etikettiermaschine (1) nach einem der vorangegangenen Ansprüche umfassend Begrenzungselemente (11a, 11b, 12a, 12b), die derart ausgebildet und angeordnet sind, dass das verschiebbare Schutzelement (8) lediglich so weit von dem Karussell (2) weg verschiebbar ist, dass kein Spalt zwischen dem verschiebbaren Schutzelement (8) und dem ortsfesten Schutzelement (9) entsteht.

10. Etikettiermaschine (1) nach Anspruch 9, wobei die Begrenzungselemente (11a, 11b, 12a, 12b) Teil des verschiebbaren Schutzelements (8) und/oder des ortsfesten Schutzelements (9) sind und/oder wobei der Unterbau (6) und/oder Führungselemente für das verschiebbare Schutzelement (8) die Begrenzungselemente (11a, 11b, 12a, 12b) umfassen und/oder wobei die Begrenzungselemente (11a, 11b, 12a, 12b) an dem Unterbau (6) und/oder an den Führungselementen befestigt sind.

11. Etikettiermaschine (1) nach Anspruch 9 oder 10, wobei das verschiebbare Schutzelement (8) ein erstes Begrenzungselement (11a, 11b) umfasst und das ortsfeste Schutzelement (9) ein zweites Begrenzungselement (12a, 12b) umfasst, wobei das erste Begrenzungselement (11a, 11b) und das zweite Begrenzungselement (12a, 12b) derart zusammenwirken, insbesondere zusammenstoßen oder ineinandergreifen, dass das verschiebbare Schutzelement (8) lediglich so weit von dem Karussell (2) weg verschiebbar ist, dass kein Spalt zwischen dem verschiebbaren Schutzelement (8) und dem ortsfesten Schutzelement (9) entsteht.

12. Etikettiermaschine (1) nach Anspruch 11, wobei das erste Begrenzungselement (11a, 11b) und das zweite Begrenzungselement (12a, 12b) in Form von vertikal verlaufenden Fortsätzen ausgebildet sind, die derart ausgebildet und angeordnet sind, dass sie aneinanderstoßen und/oder ineinandergreifen, wenn das verschiebbare Schutzelement (8) einen vorgegebenen Maximalabstand vom Karussell (2) erreicht hat, so dass das verschiebbare Schutzelement (8) nicht weiter von dem Karussell (2) weg verschiebbar ist.

## Claims

1. Labelling machine (1) comprising a carousel (2) and a labelling unit (4) which can be arranged on the periphery of the carousel (2) so as to be interchangeable, and which has a fixed substructure (6), a functional part (5) that can be displaced in the direction of the carousel (2) relative to the substructure (6), and a unit protector which, when the labelling unit (4) is connected, protects the label transfer area from user intervention,
**characterised in that**
the unit protector comprises at least one protective element (9) that fixedly attached to the substructure (6) and a protective element (8) that can be displaced in the direction of the carousel (2) relative to the first protective element,
wherein the first protective element comprises a protective screen or protective wall.

2. Labelling machine (1) according to claim 1, comprising a protector (3) for the carousel (2) which has an aperture through which the labelling unit (4) interacts with the carousel (2), wherein the fixed protective element (9) is designed and arranged such that when the labelling unit (4) is connected, it masks the aperture at least laterally, in particular essentially closes it with the protector (3) or overlaps with the latter.

3. Labelling machine (1) according to claim 1 or 2, wherein the protective elements (8, 9) are designed and arranged at least to laterally mask the functional part (5), in particular at the overall height of the functional part (5).

4. Labelling machine (1) according to one of the preceding claims, wherein the protective elements (8, 9) of the unit protector are designed and arranged such that the functional part (5) is masked laterally by the protective elements (8, 9) from at least three sides, in particular at the side facing away from the carousel (2) and two sides adjacent to that.

5. Labelling machine (1) according to one of the preceding claims, wherein the protective elements (8, 9) are designed and arranged such that there is an overlap between the fixed protective element (9) and the displaceable protective element (8).

6. Labelling machine (1) according to one of the preceding claims, wherein the displaceable protective element (8) is arranged on that side of the functional part (5) facing away from the carousel (2) and the fixed protective element (9) is affixed to the side of the substructure (6).

7. Labelling machine (1) according to claim 6, wherein the fixed protective element (9) is designed to be in at least two parts and comprises two side parts (9a, 9b) affixed on opposite sides of the substructure (6).

8. Labelling machine (1) according to claim 7, wherein the functional part (5) is arranged at least partially between the side parts (9a, 9b).

9. Labelling machine (1) according to one of the preceding claims, comprising limiting elements (11a, 11b, 12a, 12b) which are designed and arranged such that the displaceable protective element (8) can be pushed only so far away from the carousel (2) that no gap arises between the displaceable protective element (8) and the fixed protective element (9).

10. Labelling machine (1) according to claim 9, wherein the limiting elements (11a, 11b, 12a, 12b) are part of the displaceable protective element (8) and/or the fixed protective element (9), and/or wherein the substructure (6) and/or guide elements for the displaceable protective element (8) comprise the limiting elements (11a, 11b, 12a, 12b), and/or wherein the limiting elements (11a, 11b, 12a, 12b) are affixed to the substructure (6) and/or to the guide elements.

11. Labelling machine (1) according to claim 9 or 10, wherein the displaceable protective element (8) comprises a first limiting element (11a, 11b) and the fixed protective element (9) comprises a second limiting element (12a, 12b), wherein the first limiting element (11a, 11b) and the second limiting element (12a, 12b) interact in such a way, in particular that they abut one another or engage with one another, that the displaceable protective element (8) can be pushed only so far away from the carousel (2) that no gap arises between the displaceable protective element (8) and the fixed protective element (9).

12. Labelling machine (1) according to claim 11, wherein the first limiting element (11a, 11b) and the second limiting element (12a, 12b) are designed in the form of extensions running vertically, which are designed and arranged such that they abut one another and/or engage with one another when the displaceable protective element (8) has reached a specified maximum distance from the carousel (2), so that the displaceable protective element (8) cannot be displaced further away from the carousel (2).

## Revendications

1. Machine d'étiquetage (1) comprenant un carrousel (2) et un groupe d'étiquetage (4) pouvant être disposé de manière interchangeable à la périphérie du carrousel (2), qui comprend une structure de base fixe (6), une partie fonctionnelle (5) pouvant être déplacée en direction du carrousel (2) par rapport à la structure de base (6) et une protection de groupe qui, à l'état couplé du groupe d'étiquetage (4), protège la zone de transfert d'étiquettes contre des interventions d'utilisateur,
**caractérisée en ce que**
la protection de groupe comprend au moins un élément de protection (9) monté fixe sur la structure de base (6) et un élément de protection (8) mobile en direction du carrousel (2) par rapport au premier élément de protection,
dans lequel le premier élément de protection comprend une vitre de protection ou une paroi de protection.

2. Machine d'étiquetage (1) selon la revendication 1, comprenant une protection (3) du carrousel (2), qui présente une ouverture à travers laquelle le groupe d'étiquetage (4) coopère avec le carrousel (2), dans laquelle l'élément de protection fixe (9) est conçu et agencé de telle sorte que, lorsque le groupe d'étiquetage (4) est dans un état couplé, il recouvre au moins latéralement l'ouverture, en particulier la ferme essentiellement avec la protection (3) ou chevauche celle-ci.

3. Machine d'étiquetage (1) selon la revendication 1 ou 2, dans laquelle les éléments de protection (8, 9) sont conçus et agencés au moins pour recouvrir latéralement la partie fonctionnelle (5), en particulier sur toute la hauteur de la partie fonctionnelle (5).

4. Machine d'étiquetage (1) selon l'une quelconque des revendications précédentes, dans laquelle les éléments de protection (8, 9) de la protection de groupe sont conçus et agencés de telle manière que la partie fonctionnelle (5) est masquée latéralement depuis au moins trois côtés par les éléments de protection (8, 9), en particulier sur le côté opposé au carrousel (2) et deux côtés adjacents à celui-ci.

5. Machine d'étiquetage (1) selon l'une quelconque des revendications précédentes, dans laquelle les éléments de protection (8, 9) sont conçus et agencés de manière à ce qu'il y ait un chevauchement entre l'élément de protection fixe (9) et l'élément de protection mobile (8).

6. Machine d'étiquetage (1) selon l'une quelconque des revendications précédentes, dans laquelle l'élément de protection coulissant (8) est agencé sur le côté de la partie fonctionnelle (5) opposé au carrousel (2) et l'élément de protection fixe (9) est fixé latéralement à la structure de base (6).

7. Machine d'étiquetage (1) selon la revendication 6, dans laquelle l'élément de protection fixe (9) est formé au moins en deux parties et comprend deux parties latérales (9a, 9b) fixées sur des côtés opposés de la structure de base (6).

8. Machine d'étiquetage (1) selon la revendication 7, dans laquelle la partie fonctionnelle (5) est agencée au moins en partie entre les parties latérales (9a, 9b).

9. Machine d'étiquetage (1) selon l'une quelconque des revendications précédentes, comprenant des éléments de limitation (11a, 11b, 12a, 12b) qui sont conçus et agencés de telle sorte que l'élément de protection coulissant (8) ne peut être déplacé que jusqu'à une distance du carrousel (2), de sorte qu'il n'y a pas d'espace entre l'élément de protection coulissant (8) et l'élément de protection fixe (9).

10. Machine d'étiquetage (1) selon la revendication 9, dans laquelle les éléments de limitation (11a, 11b, 12a, 12b) font partie de l'élément de protection mobile (8) et/ou de l'élément de protection fixe (9) et/ou dans laquelle la structure de base (6) et/ou des éléments de guidage pour l'élément de protection mobile (8) comprennent les éléments de limitation (11a, 11b, 12a, 12b) et/ou dans laquelle les éléments de limitation (11a, 11b, 12a, 12b) sont fixés à la structure de base (6) et/ou aux éléments de guidage.

11. Machine d'étiquetage (1) selon la revendication 9 ou 10, dans laquelle l'élément de protection coulissant (8) comprend un premier élément de limitation (11a, 11b) et l'élément de protection fixe (9) comprend un second élément de limitation (12a, 12b), dans laquelle le premier élément de limitation (11a, 11b) et le second élément de limitation (12a, 12b) coopèrent, en particulier viennent en butée ou viennent en prise l'un dans l'autre, de sorte que l'élément de protection coulissant (8) ne peut être déplacé que jusqu'à une distance du carrousel (2) telle qu'il n'y a pas d'espace entre l'élément de protection coulissant (8) et l'élément de protection fixe (9).

12. Machine d'étiquetage (1) selon la revendication 11, dans laquelle le premier élément de limitation (11a, 11b) et le second élément de limitation (12a, 12b) sont réalisés sous la forme de saillies s'étendant verticalement qui sont formées et agencées de manière à être en butée et/ou à être en prise l'une dans l'autre lorsque l'élément de protection coulissant (8) a atteint une distance maximale prédéterminée par rapport au carrousel (2), de sorte que l'élément de protection coulissant (8) ne peut pas être déplacé plus loin du carrousel (2).
